# EUROPÄISCHE PATENTANMELDUNG

(11) **EP 2 282 099 A2**
(43) Veröffentlichungstag der Anmeldung: **09.02.2011**
(21) Anmeldenummer: 10008227.0
(22) Anmeldetag: 06.08.2010
(51) Int. Cl.: F16L 21/03, B28B 21/56

(54) **Hilfsprofil mit Positionsmarkierung**

(30) Priorität: 07.08.2009 DE 102009036514
(71) Anmelder: Phoenix Dichtungstechnik GmbH, 99880 Waltershausen (DE); Theodor Cordes GmbH & Co. KG, 48308 Senden-Bösensell (DE)
(72) Erfinder: Schlautmann, Frank, 48167 Münster (DE); Höft, Heiko, 21224 Rosengarten (DE)
(74) Vertreter: Stüven, Ralf

(57) **Zusammenfassung**

Die vorliegende Erfindung betrifft eine Anordnung zur Herstellung einer Dichtungsanordnung für Rohre und Schachtbauwerke sowie ein Hilfsprofil hierfür, Die Erfindung soll insbesondere die Positionierung von bei solchen Anordnungen verwendeten Hilfsprofilen und Dichtungen erleichtern. Zu diesem Zweck stellt die Erfindung eine Anordnung (1) zur Herstellung einer Dichtungsanordnung für Rohre und Schachtbauwerke bereit, wobei die Anordnung (1) eine Untermuffe (2), eine auf die Untermuffe aufgezogene Dichtung (3) sowie ein Hilfsprofil (4) umfasst, und wobei das Hilfsprofil (4) die Dichtung (3) in einem Kontaktbereich (5) kontaktiert. Das Hilfsprofil (4) weist eine sichtbare Markierung (6) auf, die den Kontaktbereich (5) zwischen Dichtung (3) und Hilfsprofil (4) markiert und eine korrekte Positionierung von Dichtung (3) und Hilfsprofil (4) zueinander anzeigt.

## Beschreibung

Die Erfindung betrifft eine Anordnung zur Herstellung einer Dichtungsanordnung für Rohre und Schachtbauwerke sowie ein Hilfsprofil hierfür.

Bei Steckmuffenverbindungen, wie sie z.B. bei Rohren oder Schachtbauwerken aus Beton und anderen aushärtbaren Materialien wie Kunststoff, verwendet werden, kommen regelmäßig zweiteilige Dichtungen zum Einsatz. Solche zweiteiligen Dichtungen bestehen aus der eigentlichen Dichtung, die z.B. einbetoniert wird, und einem Hilfsprofil, das nach dem Betoniervorgang entfernt wird. Das Hilfsprofil schafft dabei den nötigen Freiraum für die Fügung der Rohre. Um eine Dichtungsanordnung für Rohre oder Schachtbauwerke herzustellen, wird zunächst die Dichtung und danach das Hilfsprofil auf eine Untermuffe aufgezogen. Zusammen mit weiteren Verschalungsformteilen wird damit eine Anordnung hergestellt, die verwendet wird, um zum Beispiel durch einen Betonierungsvorgang die Dichtungsanordnung zu erzeugen. Eine entsprechende Anordnung ist beispielsweise in der EP 1 837 576 A1 beschrieben.

Bei bekannten gattungsgemäßen Anordnungen zur Herstellung einer Dichtungsanordnung für Rohre und Schachtbauwerke ist es häufig schwierig, Dichtung und Hilfsprofil richtig zueinander zu positionieren. Dies ist jedoch wichtig, um zuverlässig dichtende Dichtungsanordnungen herstellen zu können und um beispielsweise zu verhindern, dass beim Betoniervorgang Schlempe hinter die Dichtung läuft.

Aufgabe der vorliegenden Erfindung ist es, eine gattungsgemäße Anordnung bereitzustellen, bei der auf einfache und kostengünstige Weise eine korrekte Positionierung von Dichtung und Hilfsprofil möglich ist.

Gelöst wird die Aufgabe durch die in Anspruch 1 und 9 angegebenen Gegenstände. Vorteilhafte Ausgestaltungen der Erfindung sind in den Unteransprüchen angegeben.

Die Erfindung stellt eine Anordnung zur Herstellung einer Dichtungsanordnung für Rohre und Schachtbauwerke bereit, wobei die Anordnung eine Untermuffe, eine auf die Untermuffe aufgezogene Dichtung sowie ein Hilfsprofil umfasst, und wobei das Hilfsprofil die Dichtung in einem Kontaktbereich kontaktiert. Das Hilfsprofil weist dabei eine sichtbare Markierung auf, die den Kontaktbereich zwischen Dichtung und Hilfsprofil markiert und eine korrekte Positionierung von Dichtung und Hilfsprofil zueinander anzeigt.

Unter dem "Kontaktbereich" wird hier ein Bereich auf der Hilfsprofiloberfläche verstanden, der bei korrekter Montage, d.h. in Sollposition, oder bei noch tolerierbarer Fehlpositionierung von der Dichtung kontaktiert wird. Der Teil des Kontaktbereiches, der außerhalb des Bereiches liegt, der in Sollposition von der Dichtung kontaktiert wird, aber noch innerhalb des Bereichs liegt, der bei tolerierbarer Fehlpositionierung von der Dichtung kontaktiert wird, wird hier auch als "Toleranzbereich" bezeichnet. Eine "sichtbare Markierung" ist vorzugsweise eine mit bloßem Auge sichtbare Markierung. Der Begriff soll aber auch eine Markierung umfassen, die gegebenenfalls mit Hilfsmitteln sichtbar gemacht wird, beispielsweise eine unter UV-Licht sichtbare oder nach Lichteinstrahlung lumineszierende Markierung.

Hilfsprofil und Dichtung können aus dem gleichen Material oder auch aus verschiedenen Materialien bestehen. Vorzugsweise sind Hilfsprofil und Dichtung aus elastomerem Material.

Bei der erfindungsgemäßen Anordnung ist ein Hilfsprofil vorgesehen, das mit einer sichtbaren Markierung zur Erleichterung der Positionierung der Dichtung und des Hilfsprofils zueinander versehen ist. Bei der Montage kann anhand dieser Markierung leicht visuell ermittelt werden, ob die beiden Komponenten richtig zueinander positioniert sind. Dies kann beispielsweise so geschehen, dass bei korrekter positionierung die Markierung verdeckt und damit für das Auge unsichtbar wird, oder so, dass die Markierung zumindest teilweise sichtbar bleibt.

In einer bevorzugten Ausführungsform der erfindungsgemäßen Anordnung ist beispielsweise vorgesehen, dass die Markierung außerhalb des Kontaktbereichs an dessen Rand angeordnet ist. Hierzu können zum Beispiel Streifen am, bezogen auf die Aufzugsrichtung auf die Untermuffe, oberen und unteren Rand des Kontaktbereichs angeordnet sein, so dass bei korrekter Montage der untere Markierungsstreifen durch die Dichtung abgedeckt, der obere Markierungsstreifen aber weiterhin sichtbar ist

Alternativ, oder gegebenenfalls auch zusätzlich kann die Markierung auch innerhalb des Kontaktbereichs angeordnet sein, wobei es bevorzugt ist, dass die Markierung den Kontaktbereich vollständig abdeckt Bei dieser Ausführungsform ist die Markierung bei korrekter Montage nicht sichtbar, während sie bei fehlerhafter Montage weiterhin sichtbar ist. Auch eine Kombination aus einer Markierung innerhalb der Kontaktzone und an deren Rand ist möglich, wobei die Markierungen sich hier vorzugsweise optisch unterscheiden.

Besonders bevorzugt handelt es sich bei der Markierung um eine Farbmarkierung, wobei es bevorzugt ist, eine Farbe oder Farben zu verwenden, die sich visuell gut von der Farbe des Hilfsprofils unterscheiden lassen. Schwarz und weiß bzw. grau werden hier ebenfalls unter den Begriff "Farbe" gefasst. In einer bevorzugten Ausführungsform ist die Markierung grau oder weiß. Die Markierung kann in unterschiedlichster Weise ausgestaltet sein. Beispielsweise kann auch eine Farbkodierung vorgenommen werden, zum Beispiel mit den "Ampelfarben" rot, gelb und grün. Bei einer solchen Ausführungs form kann die grüne Farbe zum Beispiel am Rand des Kontaktbereiches angebracht sein, während sich im Kontaktbereich eine gelbe und schließlich rote Markierung anschließen, so dass bei korrekter Montage nur die grüne Markierung sichtbar bleibt, während die gelbe und rote Markierung abgedeckt sind. Eine gelbe Markierung könnte beispielsweise eine noch tolerierbare Abweichung von der optimalen Position anzeigen, während eine sichtbare rote Markierung eine fehlerhafte Positionierung erkennen lässt.

Die Markierung besteht in einer besonders vorteilhaften Ausführungsform aus einem Streifenmuster, wobei es sich um einen einzigen Streifen, z.B. innerhalb des Kontaktbereichs, handeln kann, oder um zwei Streifen, die den oberen und unteren Rand des Kontaktbereichs markieren, oder auch um mehrere Streifen, die gegebenenfalls unterschiedlich gefärbt sein können (s.o.). Die Streifen können dabei durchgehend oder unterbrochen sein. Selbstverständlich sind auch andere Muster denkbar.

Die Markierung kann in einer einfachen Ausgestaltung ein abweichend eingefärbter Bereich des Hilfsprofils oder aufgemalt sein. Vorzugsweise besteht die Markierung jedoch aus einem anderen Material als das Hilfsprofil. Das Material der Markierung ist bei dieser Ausgestaltung vorzugsweise aus einem weicheren Material als das Hilfsprofil gefertigt, wodurch für eine bessere Dichtleistung zwischen Hilfsprofil und Dichtung, zum Beispiel beim Betoniervorgang, gesorgt wird, so dass wirksam vermieden werden kann, dass Schlempe hinter die Dichtung läuft. Bei dieser Ausführungsform ist die Markierung vorzugsweise in entsprechender Schichtstärke durch Koextrusion aufgebraucht. Bevorzugt ist die Markierung fluchtend mit der benachbarten Oberfläche des Hilfsprofils angeordnet.

Die vorliegende Erfindung stellt in einem weiteren Aspekt auch ein Hilfsprofil zum Einsatz in einer erfindungsgemäßen Anordnung zur Herstellung einer Dichtungsanordnung für Rohre und Schachtbauwerke bereit, wobei das Hilfsprofil eine sichtbare Markierung aufweist, die den künftigen Kontaktbereich zwischen Dichtung und Hilfsprofil markiert und eine korrekte Positionierung von Dichtung und Hilfsprofil zueinander anzeigt.

Das erfindungs gemäße Hilfsprofil ist bereits in Zusammenhang mit der erfindungsgemäßen Anordnung beschrieben worden, so dass an dieser Stelle zur Vermeidung unnötiger Wiederholungen auf weitere Ausführungen verzichtet wird.

Die Erfindung wird im Folgenden anhand bevorzugter Ausführungsformen und der beige fügten Figuren näher beschrieben. Es zeigt
Figur 1 eine Ausführungsform einer erfindungsgemäßen Anordnung in drei verschiedenen Einbausituationen, wobei in Fig. 1A eine optimale Positionierung (Sollprofil) und in den Figuren 1B und 1C jeweils davon in die eine oder andere Richtung abweichende Positionierungen (1B Plusprofil, 1C Minusprofil) dargestellt sind, und
Figur 2 eine Ausführungsform eines erfindungsgemäßen Hilfsprofils.

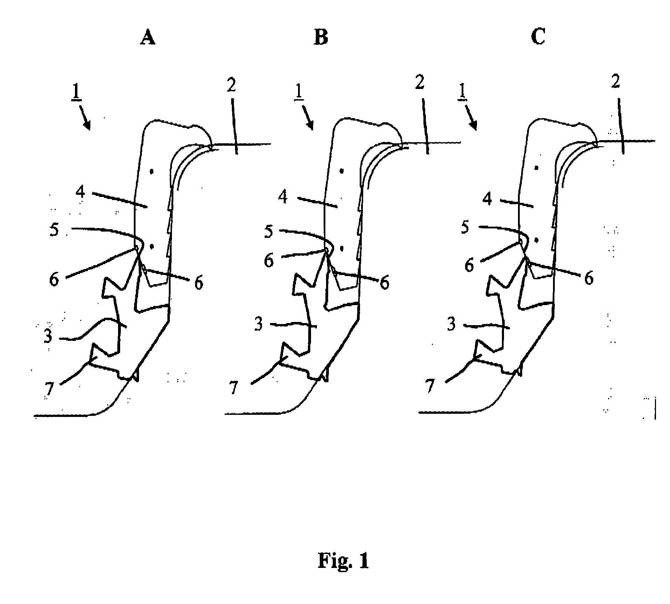

Figur 1 zeigt Schnitte durch einen Teil einer erfindungsgemäßen Anordnung 1 mit einer Untermuffe 2, auf die eine Dichtung 2 und ein Hilfsprofil 4 so aufgezogen sind, dass die Dichtung 3 das Hilfsprofil 4 im Kontaktbereich 5 in optimaler (Fig. 1A) oder noch tolerierbarer (Fig. 1B, C) Weise kontaktiert. Die Dichtung 3 weist verankerungsfüße 7 auf, mit deren Hilfe die Dichtung 3 zum Beispiel in Beton verankert wird. Das Hilfsprofil weist eine aus zwei Streifen bestehende Markierung 6 auf, die hier, von dem Ende der Untermuffe 2 aus gesehen, der das Hilfsprofil 4 am nächsten liegt, den oberen und unteren Rand des Kontaktbereiches 5 markieren. Die Streifen der Markierung 6 sind durch Koextrusion mit dem Hilfsprofil 4 hergestellt und fluchten mit der benachbarten Oberfläche des Hilfsprofils 4. Das Material der Markierung weist eine graue oder weiße Farbe auf, die gut mit der dunklen Farbe des Hilfsprofils 4 kontrastiert. Nach zum Beispiel Einbetonierung sitzt die Dichtung 3 im Muffenspiegel einer Betonsteckmuffenverbindung, während das Hilfsprofil 6 entfernt wird. Selbstverständlich kann eine entsprechende Anordnung 1 auch zur Fertigung eines Spitzendes mit integrierter Dichtung 3 dienen.

Die aus zwei Streifen bestehende Markierung 6 erleichtert die optimale oder eine von der optimalen tolerierbar abweichende Positionierung von Dichtung 3 und Hilfsprofil 4 zueinander. Bei einer optimalen oder noch tolerierbar davon abweichenden Positionierung ist der untere Streifen der Markierung 6 vollständig von der Dichtung 3 abgedeckt und somit nicht sichtbar, während der obere Streifen der Markierung 6 vollständig sichtbar ist.

Fig. 1A zeigt die Sollposition von Dichtung 3 und Hilfsprofil 4 zueinander. Zwischen dem von der Dichtung 3 kontaktierten Bereich des Kontaktbereiches 5 und dem oberen und unteren Streifen der Markierung 6 befindet sich der Toleranzbereich des Kontaktbereiches 5. Der untere Streifen der Markierung 6 ist hier abgedeckt und somit von außen nicht sichtbar, während der obere Streifen der Markierung 6 zusammen mit einem Teil des Kontaktbereiches 5, d.h. dem oberen Toleranzbereich, sichtbar bleibt Die Breite des zwischen Dichtung 3 und Markierungsstreifen noch sichtbaren Kontaktbereiches 5 gibt dem Fachmann hier auch eine Information darüber, ob die Dichtung 3 optimal positioniert ist.

Die Figuren 1B und 1C zeigen von der Sollposition abweichende, aber noch tolerierbare Positionen der Dichtung 3 und des Hilfsprofils 4 zueinander. Fig. 1B zeigt ein Plusprofil, d.h. bei dieser Anordnung ist die Dichtung 3 über die Sollposition hinaus auf das Hilfsprofil 4 aufgeschoben. Der untere Streifen der Markierung 6 ist vollständig abgedeckt, der obere Streifen der Markierung 6 jedoch noch sichtbar, während von dem Kontaktbereich 5 von außen nichts mehr sichtbar ist Fig. 1C zeigt demgegenüber ein Minusprofil, bei dem die Dichtung 3 nicht bis zur optimalen Position auf das Hilfsprofil 4 aufgeschoben ist, sondern den Kontaktbereich 5 lediglich im unteren Toleranzbereich kontaktiert. Der untere Streifen der Markierung 6 ist jedoch noch vollständig abgedeckt, was eine noch tolerierbare Positionierung anzeigt.

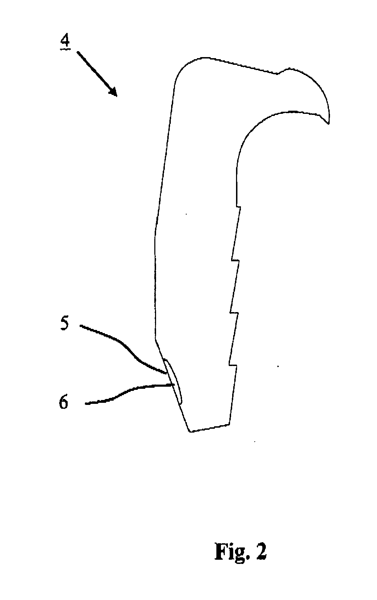

Figur 2 zeigt beispielhaft eine Ausführungsform eines erfindungsgemäßen Hilfsprofils 4, wobei die Markierung 6 hier nur aus einem einzigen Streifen besteht, der sich über den vollständigen Kontaktbereich 5 erstreckt. Die Markierung 6 ist durch Koextrusion erzeugt und weist eine graue, weiße oder eine beliebige andere Farbe oder Farbkombination auf. Bei dieser Ausführungsform ist eine optimale oder noch tolerierbar von der optimalen Positionierung abweichende Position von Hilfsprofil 4 und Dichtung 3 daran erkennbar, dass die Markierung 6 teilweise sichtbar bleibt. Vollständige Sichtbarkeit oder Unsichtbarkeit der Markierung 6 zeigt eine nicht mehr tolerierbare Fehlpositionierung an.

## Patentansprüche

1. Anordnung zur Herstellung einer Dichtungsanordnung für Rohre und Schachtbauwerke, wobei die Anordnung (1) eine Untermuffe (2), eine auf die Untermuffe aufgezogene Dichtung (3) sowie ein Hilfsprofil (4) umfasst, wobei das Hilfsprofil (4) die Dichtung (3) in einem Kontaktbereich (5) kontaktiert, **dadurch gekennzeichnet, dass** das Hilfsprofil (4) eine sichtbare Markierung (6) aufweist, die den Kontaktbereich (5) zwischen Dichtung (3) und Hilfsprofil (4) markiert und eine korrekte Positionierung von Dichtung (3) und Hilfsprofil (4) zueinander anzeigt.

2. Anordnung nach Anspruch 1, **dadurch gekennzeichnet, dass** die Markierung (6) außerhalb des Kontaktbereichs (5) an dessen Rand angeordnet ist

3. Anordnung nach Anspruch 1 oder 2, **dadurch gekennzeichnet, dass** eine Markierung (6) innerhalb des Kontaktbereichs (5) vorgesehen ist.

4. Anordnung nach Anspruch 3, **dadurch gekennzeichnet, dass** die Markierung (6) über den vollständigen Kontaktbereich (5) vorgesehen ist

5. Anordnung nach einem der vorhergehenden Ansprüche, **dadurch gekennzeichnet, dass** die Markierung (6) eine Farbmarkierung ist, wobei die Farbe vorzugsweise Grau oder Weiß ist.

6. Anordnung nach einem der vorhergehenden Ansprüche, **dadurch gekennzeichnet, dass** die Markierung (6) aus einem Streifenmuster besteht.

7. Anordnung nach einem der vorhergehenden Ansprüche, **dadurch gekennzeichnet, dass** die Markierung (6) aus einem anderen, vorzugsweise weicheren, Material besteht als das Hilfsprofil (4).

8. Anordnung nach Anspruch 7, **dadurch gekennzeichnet, dass** die Markierung (6) durch Koextrusion aufgebracht ist

9. Hilfsprofil zum Einsatz in einer Anordnung zur Herstellung einer Dichtungsanordnung für Rohre und Schachtbauwerke nach einem der Ansprüche 1 bis 8, **dadurch gekennzeichnet, dass** das Hilfsprofil (4) eine sichtbare Markierung (6) aufweist, die den künftigen Kontaktbereich (5) zwischen Dichtung (3) und Hilfsprofil (4) markiert und eine korrekte Positionierung von Dichtung (3) und Hilfsprofil (4) zueinander anzeigt.

10. Hilfsprofil nach Anspruch 9, **dadurch gekennzeichnet, dass** die Markierung (6) aus einem Streifenmuster besteht.

11. Hilfsprofil nach Anspruch 9 oder 10, **dadurch gekennzeichnet, dass** die Markierung (6) aus einem den künftigen Kontaktbereich (5) vollständig bedeckenden Farbstreifen, vorzugsweise einem grauen oder weißen Streifen, besteht.

12. Hilfsprofil nach einem der Ansprüche 9 bis 11, **dadurch gekennzeichnet, dass** die Markierung (6) aus einem anderen, vorzugsweise weicheren, Material besteht als das Hilfsprofil (4).

13. Hilfsprofil nach Anspruch 12, **dadurch gekennzeichnet, dass** die Markierung (6) durch Koextrusion aufgebracht ist.
